# EUROPEAN PATENT APPLICATION

(11) **EP 2 889 654 A1**
(43) Date of publication of application: **01.07.2015**
(21) Application number: 13840498.3
(22) Date of filing: 24.09.2013
(51) Int. Cl.: G02B 5/26, G02B 5/28

(54) **OPTICAL ARTICLE FOR RECEIVING AND EMITTING INFRARED RAY AND INFRARED RAY RECEIVING AND EMITTING UNIT**

(30) Priority: 28.09.2012 JP 2012217390
(71) Applicant: Tokai Optical Co., Ltd., Okazaki-shi, Aichi 444-2192 (JP)
(72) Inventor: KATAGIRI Toru, Okazaki-shi, Aichi 444-2192 (JP); SUGIMOTO Ryo, Okazaki-shi, Aichi 444-2192 (JP); KATO Yuji, Okazaki-shi, Aichi 444-2192 (JP)
(74) Representative: Prüfer & Partner GbR European Patent Attorneys
(86) International application number: PCT/JP2013/075681
(87) International publication number: WO 2014/050806

(57) **Abstract**

[Object] To provide an optical article for receiving and emitting infrared rays and an infrared ray receiving and emitting unit which are able to, while exhibiting white color, prevent malfunction even when obliquely passing infrared rays are used.

[Solution] A sheet-shaped optical article 1 for receiving and emitting infrared rays includes a base 2 and a mirror film 4 formed on a surface of the base 2. A diffusion film is used as the base 2 (diffusion base material) of the optical article 1. At least one of surfaces of the diffusion film is made to be a mat surface 6 (diffusion layer), whereby the diffusion film scatters visible light. On at least any of the surfaces of the base 2, a mirror film 4 (dielectric multilayer film) that transmits infrared rays and reflects visible light is formed.

## Description

### TECHNICAL FIELD

The present invention relates to optical articles for receiving and emitting infrared rays which are used in infrared ray receiving and/or emitting parts of various electronic equipment, and to infrared ray receiving and emitting units using the optical articles.

### BACKGROUND ART

In electronic equipment, an infrared ray receiving unit for wireless communication using infrared rays is generally configured to exhibit dark color for the following purposes. The purposes are for preventing a photodetector also sensitive to visible light, which is disposed inside the infrared ray receiving unit, from malfunctioning due to disturbance light, and preventing the inside of the equipment from being seen through.

Such an infrared ray receiving unit has dark color, and cannot be made to exhibit white color. Therefore, even when a major part of the electronic equipment is white, there has been no choice but to use such a dark-color infrared ray receiving unit. However, in the viewpoint of design planning to improve the appearance of the equipment by unifying the color thereof, a white-color infrared ray receiving unit has been desired.

The inventors of the present invention have proposed an infrared ray receiving and emitting unit that exhibits white color, which is described in Patent document 1 described below.

In the infrared ray receiving and emitting unit, for example, an outer surface of a base is stain-finished on which a dielectric multilayer film is formed so as to transmit infrared light, and reflects and transmits visible light. The dielectric multilayer film is set so that a wavelength range of visible light includes a wavelength range in which the reflectance exceeds the transmittance and a wavelength range in which the reflectance is below the transmittance. Accordingly, the appearance of the equipment is colored with only reflected light of visible light reflected by the dielectric multilayer film. Thus, pearl-like luster is given to the appearance color.

### PRIOR ART DOCUMENT

### PATENT DOCUMENT

[Patent document 1] Japanese Patent No. 4122010

### SUMMARY OF THE INVENTION

### PROBLEMS TO BE SOLVED BY THE INVENTION

In the infrared ray receiving and emitting unit according to Patent document 1, the visible light reflected by the dielectric multilayer film at the outer surface is diffusively reflected outward in various directions at the stain-finished outer surface. In addition, the dielectric multilayer film is formed so that the visible light includes wavelength components over the entire visible range. Therefore, the infrared ray receiving and emitting unit can be made to exhibit white color that conceals the inside from view (which is not semitransparent).

However, when the infrared ray receiving and emitting unit of Patent document 1 which is made to exhibit white color concealing the inside from view is provided in a proximity sensor of a portable terminal, malfunction of the proximity sensor is likely to be caused as described below.

Such a proximity sensor is provided with an infrared ray emitting section and a light reception detecting section being arranged adjacent to each other. When an infrared ray emitted from the emitting section is reflected by an object approaching the proximity sensor and returned, the proximity sensor detects that the approach of the object. If the infrared ray receiving and emitting unit is provided outside the proximity sensor, the light reception detecting section detects an infrared ray even if no object approaches, and determines that an object approaches.

The above situation is considered to be caused by the following factors. The infrared ray emitted from the emitting section is scattered at the stain-finished outer surface of the infrared ray receiving and emitting unit, and a part of the infrared ray is bounced inward and detected by the light reception detecting section. Accordingly, the stain-finished outer surface required to represent white color may invite erroneous detection of the proximity sensor. In the proximity sensor, the emitting section and the light reception detecting section are disposed side by side, and configured such that an infrared ray emitted from the emitting section obliquely with respect to the outer surface is bounced obliquely and detected by the light reception detecting section. Further, when the infrared ray obliquely enters the stain-finished outer surface, the amount of the infrared ray that returns inward may be increased as compared to the case where the infrared ray perpendicularly enters the outer surface.

If the proximity sensor of the portable terminal performs such erroneous detection, the operation of the portable terminal is adversely affected as follows. For example, in the case where a smartphone is set so that the brightness of a screen is reduced or turned off for power saving when a user moves his/her face closer to the smartphone for talking, the brightness of the screen is reduced or turned off even if the user does not move his/her face closer thereto, which makes the smartphone user-unfriendly.

Further, in other situations or sites in which an infrared ray may pass obliquely with respect to the infrared ray receiving and emitting unit, such as bidirectional communication using an infrared ray having no directivity, there is also a possibility of malfunction like the proximity sensor.

Therefore, the invention according to claim land claim 2 · claim 6 has an object to provide an optical article for receiving and emitting infrared rays · an infrared ray receiving and emitting unit which are able to prevent malfunction even when using an infrared ray that obliquely passes, while exhibiting white color (bright color may be included).

### SOLUTION TO THE PROBLEMS

In order to achieve the above objects, the invention according to claim 1 is an optical article for receiving and emitting infrared rays, including a semitransparent diffusion section that diffuses visible light, and a mirror that transmits infrared rays and reflects visible light. The optical article is able to transmit infrared rays.

In order to achieve the above objects, the invention according to claim 2 is an optical article for receiving and emitting infrared rays, including a semitransparent diffusion base material that transmits infrared rays, and includes, on at least one surface thereof, a diffusion layer that diffuses visible light, and a mirror that is formed on at least one surface of the diffusion base material, and transmits infrared rays and reflects visible light.

In the invention according to claim 3, in order to achieve an object of making whiteness denser while ensuring favorable operation by reducing the probability of malfunction in addition to the above objects, the mirror in the above invention is formed on the surface having the diffusion layer.

In the invention according to claim 4, in order to further achieve an object of configuring the mirror so as to favorably transmit an oblique infrared ray in addition to the above objects, the mirror in the above invention is a dielectric multilayer film containing at least two kinds of layers having different refractive indexes, and the number of the layers is 10 or more and 30 or less.

In the invention according to claim 5, claim 6, in order to achieve an object of easily obtaining a base that favorably transmits an oblique infrared ray and is able to exhibit dense white color in addition to the above objects, the diffusion base material in the above invention is a diffusion film, and the diffusion film is a film for display.

In order to achieve the above objects, the invention according to claim 7 is an infrared ray receiving and emitting unit in which the optical article for receiving and emitting infrared rays is disposed outside a component of electronic equipment, which component uses infrared rays.

In the invention according to claim 8, in order to achieve an object of ensuring more favorable operation by further reducing the probability of malfunction by improvement of arrangement in addition to the above objects, the optical article for receiving and emitting infrared rays in the above invention has the mirror that is provided on only the diffusion layer formed on only one surface of the diffusion section or the diffusion base material, and the optical article is disposed with the one surface facing the component.

### ADVANTAGEOUS EFFECTS OF THE INVENTION

According to the present invention, in an optical article for receiving and emitting infrared rays, a mirror is formed on a surface of a semitransparent diffusion base material with a diffusion layer. Therefore, it is possible to provide an optical article for receiving and emitting infrared rays and an infrared ray receiving and emitting unit which are able to prevent malfunction even when using an infrared ray that obliquely passes, while exhibiting dense white color.

### BRIEF DESCRIPTION OF THE DRAWINGS

[FIG. 1] FIG. 1 is a schematic cross-sectional view of a sheet-like optical article for receiving and emitting infrared ray according to the present invention.
[FIG. 2] FIG. 2 is a schematic cross-sectional view of an infrared ray receiving and emitting unit included in a smartphone, in which an optical article for receiving and emitting infrared rays is disposed in the vicinity of a proximity sensor that receives and emits an infrared ray.

### DESCRIPTION OF EMBODIMENTS

Hereinafter, an embodiment of the present invention will be described. It is noted that the embodiment of the present invention is not limited to that described below.

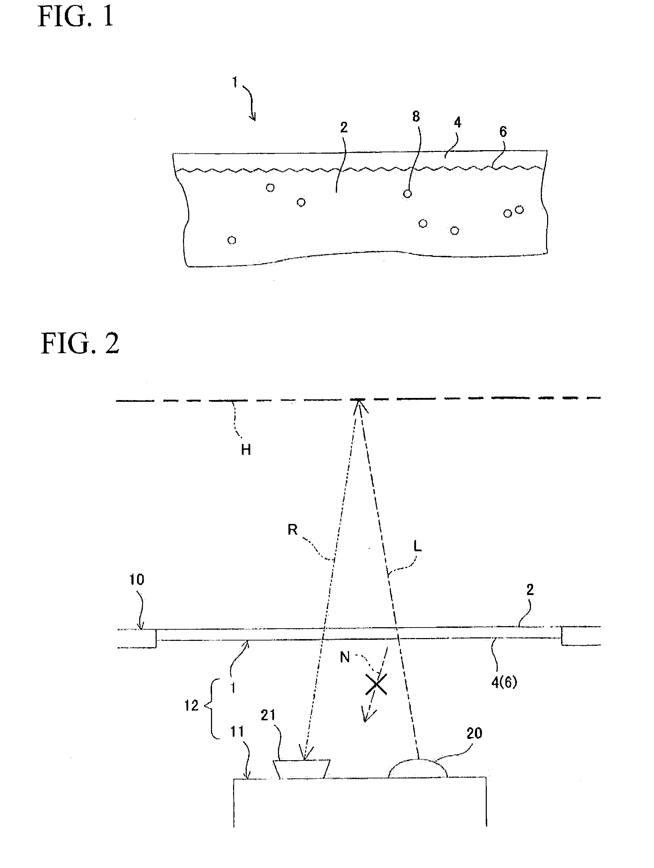

FIG. 1 is a schematic cross-sectional view of a sheet-like optical article 1 for receiving and emitting infrared rays, according to the present invention.

The optical article 1 includes a base 2, and a mirror film 4 as a mirror formed on a surface of the base 2.

It is noted that, in the present embodiment (excluding optional modifications), the "surface" indicates (each of) two wider surfaces.

As the base 2 of the optical article 1, a semitransparent diffusion base material is used, and preferably, a diffusion film for display is used.

The diffusion film for display is generally used as a film for diffusing display light of a display such as a liquid crystal monitor, and an LED signboard. The diffusion film is semitransparent as a single body. Preferably, the diffusion film is made of a synthetic resin such as polycarbonate, acrylic, polyethylene terephthalate (PET), polyethylene, polypropylene, polyester, or polyimide.

The diffusion film moderately scatters transmitted visible light in a direction intersecting the diffusion film (particularly, a perpendicular direction to a surface thereof), thereby to transmit visible light emitted from a display while concealing the state of a display surface or the like.

Regarding a general diffusion film, in view of its use, attention has been devoted to optical transmission characteristics in a visible region, but transmission characteristics in an infrared region has not been particularly concerned. However, many diffusion films also transmit infrared rays, as an extension of having a property of transmitting visible light. In the present invention, a diffusion film capable of transmitting infrared rays (having an infrared transparency) is used as the base.

The diffusion film, having at least one of surfaces thereof being a mat surface 6, scatters visible light. The mat surface 6 is formed by a plurality of fine grooves or steps regularly or irregularly. Preferably, the mat surface 6 is formed of a plurality of regular grooves. As the mat surface 6 scatters visible light to diffuse the visible light, the mat surface 6 serves as a diffusion layer.

The diffusion film may have a plurality of (a large number of) particles 8, 8 ··· that reflect visible light. Preferably, the diameters of these particles 8, 8 ··· are made uniform within a predetermined range. The particles 8, 8 ··· may be contained in the diffusion film, or may be disposed in only at least one of the surfaces of the diffusion film. It is noted that such particles 8, 8 ··· may be disposed in only the surface side (within a predetermined distance from the surface) to form a diffusion layer.

A diffusion film not for display may be used as the base 2. Alternatively, as the base 2, a resin molded product which is not a sheet or a film and in which a diffusion layer is formed and a glass substrate with a diffusion layer may be adopted.

On at least any of surfaces of the base 2, a mirror film 4 that transmits infrared rays and reflects visible light is formed. The mirror is not limited to the mirror film 4, and may be a sheet-like mirror obtained by alternately laminating resins having different refractive indexes up to several hundred layers. Such a sheet-like mirror may be provided with a diffusion layer that diffuses visible light. Further, the optical article 1 may be formed by embedding the base 2 having the mirror film 4 in a resin by insertion molding. The sheet-like mirror and the base 2 may be placed at different positions in the same article by, for example, separately embedding them. These modifications are appropriately summarized as follows. The optical article 1 may include a semitransparent diffusion section including a diffusion layer that diffuses visible light, and a mirror section that transmits infrared rays and reflects visible light. Preferably, the diffusion layer is formed at a surface of the optical article, and (the base of) the optical article 1 including the diffusion section transmits (has a portion to transmit) infrared rays.

As shown in FIG. 1, the mirror film 4 is preferably formed on the mat surface 6, and more preferably, formed on only the mat surface 6 provided on only one surface of the base 2.

Preferably, the mirror film 4 is formed of a dielectric multilayer film. The dielectric multilayer film is formed by alternately laminating a thin film including a film substance of a low-refractive material and a thin film including a film quality of a high-refractive material. In other words, the mirror film 4 is formed as a multilayer film including at least two kinds of layers having different refractive indexes. As the film substances, (two or three kinds of) substances appropriately selected from among a metal oxide, a metal fluoride, and the like may be used.

The mirror film 4, which is a dielectric multilayer film, preferably includes 10 layers or more in total, and more preferably, includes 14 layers or more, from the viewpoint that the reflectance of an infrared ray that enters at an angle with respect to a perpendicular line to the surface is also sufficiently reduced. The mirror film 4, which is a dielectric multilayer film, preferably includes 30 layers or less in total, and more preferably, includes 22 layers or less, from the viewpoints of film formation cost and durability.

Providing the semitransparent base 2 with the mirror film 4 allows the optical article to exhibit white color.

The above-mentioned optical article 1 is used in an infrared ray receiving and emitting unit that receives and/or emits infrared rays in electronic equipment. Preferably, as shown in FIG. 2, the optical article 1 is used in an infrared ray receiving and emitting unit 12 including a component (proximity sensor 11 in FIG. 2) that receives and emits infrared rays in electronic equipment (smartphone 10 in FIG. 2).

In the infrared ray receiving and emitting unit 12 of the smartphone 10, the optical article 1 is disposed outside the proximity sensor 11 included in the smartphone 10. Preferably, the optical article 1 is disposed along a frame of the smartphone 10 so as to exhibit the same color as the white frame. Preferably, the optical article 1 has the mat surface 6 and the mirror film 4 formed on one surface thereof, and is disposed so that the one surface faces the inner side of the smartphone 10 (disposed with the one surface as an inner surface). If, in the optical article 1, the mirror film 4 is formed on a flat surface which is not the mat surface 6, preferably, the optical article 1 is disposed so that the mirror film 4 faces the inner side of the smartphone 10.

The proximity sensor 11 includes an infrared ray source 20 (e.g., an infrared LED) that emits an infrared ray, and a photodetector section 21 that detects reception of the infrared ray. The proximity sensor 11 is electrically connected to a control means (not shown) of the smartphone 10.

When the smartphone 10 is powered on (or when a proximity sensor operation command is further turned on), the infrared ray source 20 is lit constantly or at intervals of a predetermined pattern, and emits an infrared ray outward (an arrow L in FIG. 2).

The emitted infrared ray passes through the optical article 1 as follows.

The infrared ray first passes through the mirror film 4. As the mirror film 4 reflects visible light but transmits infrared rays, the infrared ray is allowed to pass through the mirror film 4. The reflectance, when the infrared ray passes through the mirror film 4, is extremely low (e.g., about 4% in the direction perpendicular to the surface) due to the mirror film 4, and the reflectance is also small even in the state where the infrared ray enters at an angle with respect to the perpendicular line to the surface.

Next, the infrared ray passes through the mat surface 6. As the mat surface 6 has irregularities, the mat surface 6 scatters visible light and is more likely to scatter the infrared ray as well. Therefore, it is conceivable that a part of the scattered infrared ray may return to the inner side of the smartphone 10 as hypothetically shown by an arrow N in FIG. 2. However, as the base 2 is a diffusion film for a display and the mat surface 6 is formed to transmit display light of the display without deforming it, no infrared ray returns to the proximity sensor 11 side at the mat surface 6 of the optical article 1. Even if there is such return of the infrared ray, the infrared ray is as weak as the reflected infrared ray at the mirror film 4.

Subsequently, the infrared ray passes through the semitransparent base 2. The base 2 has infrared ray transmitting performance, so that the base 2 allows the infrared ray to pass therethrough with a high transmittance.

The infrared ray transmitted through the optical article 1 reaches the outside of the smartphone 10.

If there is no human body (e.g., head H) or object in a region outside the smartphone 10 and near (adjacent to) the infrared ray receiving and emitting unit 12, the infrared ray is emitted as it is.

On the other hand, if there is a head H in the region near the infrared ray receiving and emitting unit 12, the infrared ray is reflected by the head H at an extremely high reflectance as shown by an arrow R in FIG. 2, and the reflected infrared ray travels toward the infrared ray receiving and emitting unit 12.

The reflected infrared ray passes through the optical article 1 from the outer surface to the inner surface in a course just opposite to the course in which the infrared ray from the infrared ray source 20 passes through the optical article 1, and then reaches the photodetector section 21.

When the photodetector section 21 detects the reflected infrared ray (at an intensity higher than a predetermined intensity), the photodetector section 21 transmits a detection signal to the control means of the smartphone 10. The detection signal informs that the head H is approaching the proximity sensor 11 or the infrared ray receiving and emitting unit 12. It is noted that the photodetector section 21 may transmit the reception intensity of the infrared ray to the control means.

In the optical article 1, a semitransparent diffusion base material is used as the base 2, and the mirror film 4 is formed on one or both of the surfaces of the base 2. Therefore, the infrared ray can be received and emitted while concealing, with white color, the internal structure of the equipment, such as the proximity sensor 11.

As the mirror film 4 reflects visible light, the semitransparent state of the base 2 due to the visible light diffusing function thereof does not become pale transparent or like frosted-glass but becomes sufficiently dense white color.

Further, due to use of the diffusion base material, occurrence of an infrared ray that immediately returns is easily prevented, as shown by the arrow N in FIG. 2. The infrared ray that immediately returns is likely to be detected by the photodetector section 21, and causes malfunction such as detection of approach of the head H which is actually not approaching. Therefore, preventing such infrared ray is useful. In order to cause the infrared ray receiving and emitting unit to exhibit dense white color, scattering of visible light or formation of a visible light reflecting film is needed. However, such scattering or formation is likely to cause occurrence of an optical path other than desired optical paths, such as occurrence of an infrared ray that immediately returns. Actually, when the infrared ray receiving and emitting unit shown as the background art (in which a dielectric multilayer film made of eight layers is formed on the stain-finished surface to exhibit white color) is used for the proximity sensor 11 using an infrared ray of an oblique optical path, probability of occurrence of malfunction is relatively increased. In contrast, in the optical article 1 of the present invention, occurrence of immediately returning infrared ray is prevented as shown by the arrow N in FIG. 2.

Further, since the mirror film 4 is formed on the mat surface 6, the white color of the optical article 1 is made to be denser, and thereby occurrence of immediately returning infrared ray can be prevented more effectively.

Furthermore, when the diffusion film is used as the diffusion base material, the optical article 1 which is easily manufactured and used can be provided. When the diffusion film for display is used as the diffusion film, the base 2 having the favorable mat surface 6 capable of providing dense white color can be easily realized.

In addition, the mirror film 4 is a dielectric multilayer film formed of a predetermined number or more of layers, so that the reflectance of an oblique infrared ray as well as the reflectance of a perpendicular infrared ray can be sufficiently reduced. Thus, the white-color infrared ray receiving and emitting unit can be provided also in equipment using an oblique infrared ray. Further, since the mirror film 4 is a dielectric multilayer film formed of a predetermined number or less of layers, it is possible to provide an infrared ray receiving and emitting unit which is excellent in terms of cost and durability.

### [Examples]

### <<Overview>>

As described hereinafter, Examples 1 to 7 were produced which belong to the optical article for receiving and emitting infrared rays according to the present invention. In addition, Comparative Example 1 that does not belong to the present invention was also produced in order to compare with Examples 1 to 7. Then, for each of Examples 1 to 7 and Comparative Example 1, the following parameters were examined for the density of white color, the transmitting state of an infrared ray in the direction perpendicular to the surface, the transmitting state of a 45° incident infrared ray that obliquely enters at an angle of 45° with respect to the perpendicular line to the surface, the operating state of the proximity sensor 11 when the optical article is used for the proximity sensor 11 described in the above embodiment, and the film formation cost of the mirror film 4.

### «Configuration and the like»

As shown in the "film" column in the following [Table 1], a diffusion film for display having a parallel-grooves-like mat surface 6 on only one surface thereof was used, as a base 2 of Examples 1 to 7. As a base of Comparative Example 1, a resin film was used whose material and size were the same as those of the respective Examples but whose both surfaces were flat. It is noted that the base of Comparative Example 1 has no mat surface 6, so that visible light is not scattered. Accordingly, the base is, as a single body, not semitransparent but transparent.

As shown in the "mirror film" column in [Table 1], a mirror film 4 was formed on one flat surface in Example 1 and Comparative Example 1, while a mirror film 4 was formed on the mat surface 6 in Examples 2 to 7.

Each of the mirror films 4 was a dielectric multilayer film. A layer contacting the base 2 was formed of zirconium dioxide (ZrO₂), and a layer adjacent to the layer contacting the base 2 was formed of silicon dioxide (SiO₂), and then these layers were alternately laminated to form the dielectric multilayer film. As shown in the "number of layers" column in [Table 1], the total numbers of layers in the mirror films 4 of Examples 1 to 7 are 14, 14, 22, 30, 10, 9, and 31, respectively. In Comparative Example 1, the total number of layers in the mirror film 4 is 14.

**[Table 1]**

| | Film | Mirror film | Number of layers | Whiteness | Infrared ray perpendicular transmission | Infrared ray oblique transmission | Operation of proximity sensor | Film formation cost |
|---|---|---|---|---|---|---|---|---|
| Ex. 1 | diffusion (one-side mat surface) | flat surface | 14 | ○ | ⊚ | ⊚ | ⊚ | ⊚ |
| Ex. 2 | diffusion (one-side mat surface) | mat surface | 14 | ⊚ | ⊚ | ⊚ | ⊚ | ⊚ |
| Ex. 3 | diffusion (one-side mat surface) | mat surface | 22 | ⊚ | ⊚ | ⊚ | ⊚ | ⊚ |
| Ex. 4 | diffusion (one-side mat surface) | mat surface | 30 | ⊚ | ⊚ | ⊚ | ⊚ | ○ |
| Ex. 5 | diffusion (one-side mat surface) | mat surface | 10 | ⊚ | ⊚ | ⊚ | ⊚ | ⊚ |
| Ex. 6 | diffusion (one-side mat surface) | mat surface | 9 | ⊚ | ⊚ | ○ | ○ | ⊚ |
| Ex. 7 | diffusion (one-side mat surface) | mat surface | 31 | ⊚ | ⊚ | ⊚ | ⊚ | Δ |
| Com. Ex. 1 | flat | one-side flat surface | 14 | × | ⊚ | ⊚ | ⊚ | ⊚ |

### <<Results and Evaluation and the like>>

First, regarding the density of white color, as shown in the "whiteness" column in [Table 1], Example 1 shows dense white color (bright color) was achieved (○) although strictly speaking it had a little cloudy silver tone. In Examples 2 to 7, dense and nontransparent white color was achieved (⊚). On the other hand, in Comparative Example 1, a completely silver mirror was obtained (×). In Comparative Example 1, visible light is not scattered, and thus no whiteness can be given even if a transparent base is provided with the mirror film. In contrast, in Examples 1 to 7, since visible light is scattered, it is possible to make the base 2 have sufficiently dense white color by making the base 2 semitransparent so as to be able to transmit an infrared ray and scatter visible light, and providing the base 2 with the mirror film 4.

Next, regarding the transmittance in the case where an infrared ray transmits perpendicularly to the surface, as shown in the "infrared ray perpendicular transmission" column in [Table 1], Examples 1 to 7 and Comparative Example 1 all showed sufficient transmittances (about 90 to 93% in a wavelength range of 800 to 900 nm; ⊚).

Regarding the transmittance in the case where an infrared ray enters at an angle of 45° with respect to the surface, as shown in the "infrared ray oblique transmission" column in [Table 1], Example 6 showed relatively good transmittance (about 80 to 90% in the wavelength range of 800 to 900 nm; ○). Examples 1 to 5 and 7 and Comparative Example 1 showed excellent transmittances (about 90 to 93% in the wavelength range of 800 to 900 nm; ⊚).

When Example 6 is compared to Examples 1 to 5 and 7, the following findings are observed. When the number of layers in the mirror film 4 as a dielectric multilayer film is 10 or more, the optical article becomes excellent in the transmittance for an obliquely incident infrared ray. Thus, it is possible to effectively prevent malfunction in equipment that uses an oblique infrared ray, such as the proximity sensor 11.

Regarding excellence of operation (low probability of malfunction occurrence) in the case where the optical article is used for the proximity sensor 11, there is a tendency similar to the level of the transmittance of the oblique infrared ray, as shown in the "operation of proximity sensor" column in [Table 1].

Subsequently, regarding the cost for forming the mirror film 4, as shown in the << film formation cost>> column in [Table 1], Examples 1 to 3 and 5 to 6, and Comparative Example 1 show low costs (⊚), Example 4 (number of layers = 30) shows relatively low cost (○), and Example 7 shows relatively high cost (Δ) because the number of layers is 31.

Hereinafter, an example of an invention relating to the number of layers in the mirror film 4 as a dielectric multilayer film will be described.

The example of the invention is an optical article for receiving and emitting infrared rays, including a base that transmits infrared rays, and a mirror (film) that transmits infrared rays and reflects visible light (which mirror is formed on at least one of surfaces of the base). The mirror (film) is a dielectric multilayer film, and the number of layers is not smaller than 10 (14) but not larger than 30 (22).

### REFERENCE SIGNS LIST

1·· optical article (for receiving and emitting infrared rays), 2 ·· base (diffusion section, diffusion base material, diffusion film), 4 ·· mirror film (mirror, dielectric multilayer film), 6 ·· mat surface (diffusion layer), 10 ·· smartphone (electronic equipment), 11 ·· proximity sensor (component using infrared rays), 12 ·· infrared ray receiving and emitting unit

## Claims

1. An optical article for receiving and emitting infrared rays, including:
a semitransparent diffusion section that diffuses visible light; and
a mirror that transmits infrared rays and reflects visible light, wherein
the optical article is able to transmit infrared rays.

2. An optical article for receiving and emitting infrared rays, including:
a semitransparent diffusion base material that transmits infrared rays, the diffusion base material including, on at least one surface thereof, a diffusion layer that diffuses visible light; and
a mirror formed on at least one surface of the diffusion base material, the mirror transmitting infrared rays and reflecting visible light.

3. The optical article for receiving and emitting infrared rays according to claim 2, wherein
the mirror is formed on the surface having the diffusion layer.

4. The optical article for receiving and emitting infrared rays according to claim 2 or claim 3, wherein
the mirror is a dielectric multilayer film containing at least two kinds of layers having different refractive indexes, and the number of the layers is 10 or more and 30 or less.

5. The optical article for receiving and emitting infrared rays according to any of claims 2 to 4, wherein
the diffusion base material is a diffusion film.

6. The optical article for receiving and emitting infrared rays according to claim 5, wherein
the diffusion film is a film for display.

7. An infrared ray receiving and emitting unit, wherein,
the optical article for receiving and emitting infrared rays according to any of claims 1 to 6 is disposed outside a component of electronic equipment, which component uses infrared rays.

8. The infrared ray receiving and emitting unit according to claim 7, wherein
the optical article for receiving and emitting infrared rays
has the mirror that is provided on only the diffusion layer formed on only one surface of the diffusion section or the diffusion base material, and
is disposed with the one surface facing the component.
